(19) Europäisches Patentamt / European Patent Office / Office européen des brevets

(11) **EP 4 395 097 A1**

(12) **EUROPEAN PATENT APPLICATION**

(43) Date of publication:
**03.07.2024 Bulletin 2024/27**

(21) Application number: **23211872.9**

(22) Date of filing: **23.11.2023**

(51) International Patent Classification (IPC):
*H02J 3/18* $^{(2006.01)}$    *H02J 3/26* $^{(2006.01)}$

(52) Cooperative Patent Classification (CPC):
**H02J 3/26; H02J 3/1878**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.11.2022 SI 202200232**

(71) Applicant: **Grid Instruments d.o.o.**
**1231 Crnuce (SI)**

(72) Inventor: **KUHAR, URBAN**
**1231 Crnuce (SI)**

(74) Representative: **Patentni Biro AF d.o.o.**
**Kotnikova 32, p.p. 2706**
**1001 Ljubljana (SI)**

(54) **PHASE BALANCING DEVICE FOR A POLYPHASE ELECTRIC POWER DISTRIBUTION NETWORK**

(57)    A phase balancing device (100) for a polyphase electric power distribution network, comprising a phase input (102) configured to be supplied, from an upstream portion of the polyphase electric power distribution network, with a plurality of alternating voltages having initial phase angles with a predetermined phase offset relative to each other, at least one phase shifter (110a, 110b, 110c) configured to shift a phase angle of at least one of the alternating voltages from the initial phase angle by a changeover phase angle which is equal to the predetermined phase offset,

a phase output (104) configured to supply the at least one phase-shifted alternating voltage to a downstream portion of the polyphase electric power distribution network, and a controller (106) configured to control the at least one phase shifter (110a, 110b, 110c). The controller (106) is further configured to cause the at least one phase shifter (110a, 110b, 110c) to successively change the phase angle of the at least one alternating voltage over a plurality of intermediate phase angles.

Figure 2

EP 4 395 097 A1

**Description**

Technical field

The present invention relates to a phase balancing device for a polyphase electric power distribution network.

Background

The most common type of alternating current used in a power network is three-phase electric power. A three-phase power network is a type of polyphase system that uses three wires (phases) for the generation, transmission, and distribution of electric power in electrical grids. Three-phase electric power works by the voltage and currents being 120° out of phase on the three wires.

In such a three-phase system, all loads supplied by the power system are connected to one or more of the three phases. In fact, in power distribution networks, most of the loads are connected to a single phase causing asymmetrical loading along certain supply lines. Normally, loading and voltage asymmetry are more pronounced deeper in the network and due to statistical aggregation of loads less pronounced higher in the network.

Asymmetrical loading, in turn, causes asymmetrical voltage profiles across the supply lines which have several adverse effects on the power quality at the connected customers. In this case, three-phase machines connected to the power distribution network are operated with reduced efficiency and greater heating. Furthermore, the power distribution network itself operates with reduced efficiency as asymmetric loading gives rise to return current that is not present in the case of symmetrical loading which causes additional technical losses. Large voltage asymmetries also mean reduced hosting and loading capacity of a particular point in the network. Due to the nature of most loads in the power distribution network, complete elimination of load asymmetry cannot be achieved in most cases. However, there are several different ways to reduce it, or its effects.

Line voltage regulators provide voltage regulation capability on a particular power feeder line. However, such voltage regulators can only reduce voltage asymmetry. Loading asymmetry still persists. Besides being large and difficult to install, conventional voltage regulators are also expensive and thus not suitable for large scale implementation.

Inverter based balancers operate on the principle of current rectification and inversion with digitally controlled power electronics components. In this way, the balancer can create symmetrical loading on the primary side and supply asymmetric loads on the secondary side so that the loading profile upstream of the balancer is symmetrical. As these types of devices are expensive and large, they are also not widely used in power distribution networks for loading asymmetry mitigation.

Battery storage systems with inverters similarly can reduce voltage asymmetry by providing additional current sourcing to a particular network phase or by sinking current on a particular phase and thus creating a more symmetrical voltage profile and reducing neutral current.

A device for dynamic load rearrangement is disclosed in WO 2022/162415 A1 in which the loads on one phase are transferred to another by using power switches such as relays, power contactors or thyristors. The problem with such a device is that switching the loads creates a discontinuity of the voltage signal in the form of a phase jump of 120°, which is undesirable in terms of the quality of voltage supply and in most cases unacceptable in terms of the operation of the power system.

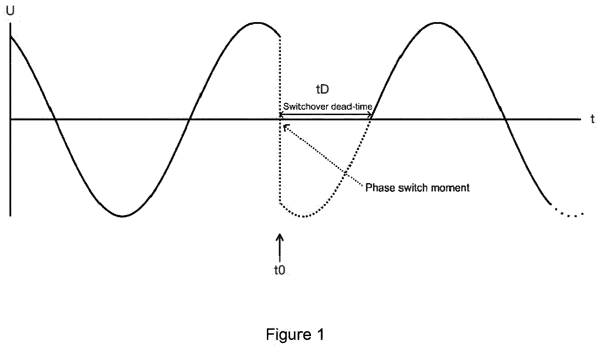

An undesired phase jump of a voltage signal that occurs in such a conventional system when transferring a load from one phase to another is illustrated in a diagram according to Figure 1. The diagram shows an AC voltage signal U as a function of time t. Assumed that a load on one phase is transferred to another phase at a time t0, a large jump of voltage phase can cause grid-tie inverters to shut down after a switchover dead time tD as such inverters do not have (and, by standards, are not required to have) ride-through capability that would tolerate such large phase jumps.

Static load rearrangement is another measure that has been used to reduce load asymmetry. However, since the loads in the power network are changing all the time, load asymmetry is necessarily a time-dependent phenomena. It may be that one phase is disproportionately loaded one period and another phase in another period. The nature of loads prevents static rearrangement of loads in a way that would permanently reduce asymmetry.

Description of the invention

It is an object of the present invention to provide a phase balancing device which is capable of easily and reliably improving load and voltage symmetry in a three-phase power network.

This object is achieved by a phase balancing device according to claim 1. Advantageous embodiments are defined in the dependent claims and the following description.

A phase balancing device for a polyphase electric power distribution network comprises a phase input configured to be supplied, from an upstream portion of the polyphase electric power distribution network, with a plurality of alternating voltages having initial phase angles with a predetermined phase offset relative to each other. The phase balancing device further comprises at least one phase shifter configured to shift a phase angle of at least one of the alternating voltages from the initial phase angle by a changeover phase angle which is equal to the predetermined phase offset. Furthermore, the phase shifter comprises a phase output configured to supply the at least one phase-shifted alternating voltage to a downstream portion of the polyphase electric power distribution network. In addition, the phase balancing device comprises a controller configured to control the at least one phase shifter. The controller is further configured to cause the at least one phase shifter to successively change the phase angle of the at least one alternating voltage over a plurality of intermediate phase angles.

To address shortcomings of conventional approaches described above, the phase shifting device according to the present invention is capable of rearranging the loads from a more loaded phase to a less loaded phase, thus achieving better load and voltage symmetry. Importantly, improved load and voltage symmetry can be achieved without a large discontinuous phase jump when a switching maneuver is executed. Thus, rather than switching the phase angle in one step by the changeover phase angle of, for example, 120°, the phase shifter is controlled so that the phase angle is gradually rotated, passing through a number of predetermined intermediate phase angles before the final phase angle is reached.

Preferably, the controller is configured to cause the at least one phase shifter to successively change the phase angle of the at least one alternating voltage in a sequence of discrete steps. By selecting a suitable step size, a sufficiently smooth yet efficient adjustment of the phase angle can be achieved. As an alternative, the phase shifter may be configured to change the phase angle continuously.

In a preferred embodiment, the controller is configured to switch from a normal operating state, in which the at least one phase shifter is deactivated, into a phase switching state, in which the phase shifter is activated to effect the intended phase rotation. Thus, the phase shifter is activated only when a switching maneuver from one phase to another phase is to be executed. Otherwise, the phase shifter remains disconnected from a pathway conducting the phase input to the phase output. Accordingly, low conducting losses are ensured in the normal operating mode.

Preferably, the controller is configured to activate the at least one phase shifter during a predetermined phase balancing period. The at least one phase shifter may be further configured to successively change the phase angle of the at least one alternating voltage throughout the predetermined phase balancing period. For example, the phase balancing period is predetermined to be in a range from 0.6 seconds to 10 seconds. By appropriately setting the phase balancing period during which the phase shifter is operated, a smooth phase shift rather than a large phase jump is achieved.

According to a preferred embodiment, the at least one phase balancer comprises a plurality of phase shifters, each phase shifter being configured to shift the initial phase angle of one of the alternating voltages by the changeover angle. Furthermore, the phase output is configured to supply all phase-shifted alternating voltages to the downstream portion of the polyphase electric power distribution network. For example, the phase balance device according to the invention may be adapted to a conventional three-phase electric power distribution network. In that case, the phase shifting device comprises in total three phase shifters which switch one phase to another.

However, the phase balancing device is not limited to the above embodiment. Alternatively, the at least one phase shifter may be formed by a single phase shifter which is configured to shift the initial phase angle of a single one of the alternating voltages by the changeover angle. In this case, the phase output is configured to supply the single phase-shifted alternating voltage to the downstream portion of the polyphase electric power distribution network. For example, an implementation with three incoming phases and only one outgoing phase is conceivable.

Preferably, the phase shifter comprises a delta zigzag transformer having three primary windings configured in delta connection and six secondary windings configured in zigzag connection, two of the secondary windings being associated with one of the primary windings. Such a delta zigzag transformer provides an inexpensive yet reliable implementation of the phase shifter without being limited thereto. For example, rather than a transformer, a semiconductor device operating on the principle of current rectification and inversion may be used to implement the phase shifter.

It should be noted that the specific design of the phase shifter is adapted depending on whether stepwise or continuous phase rotation is to be realized. For example, if a delta-zigzag transformer is used, the transformer circuitry and connections provided for continuous phase rotation may be different from that provided for stepwise rotation.

When using a delta zigzag transformer, each secondary winding may have associated therewith a plurality of taps which are individually activatable by the controller to vary a voltage tapped from the secondary winding. By using such taps, it is possible to set appropriate voltages on the secondary windings so that the intermediate phase, which serves to avoid large phase jumps, can be provided precisely and fast.

In a preferred embodiment, at least one of the taps of each secondary winding is rated for a voltage exceeding a nominal voltage of the delta zigzag transformer. In this embodiment, the controller is configured to activate the one or more taps, which are designed for voltages larger than the nominal voltage, depending on a measured input current to compensate for a voltage drop across the transformer windings. Thus, a transformer as small and therefore as cheap as possible can be used, and this transformer is potentially overloaded during the switching maneuver. In the event of overloading, the voltage drop across the windings may be significant. When the phase balancing device is configured to measure the input current, the switching logic can be implemented to compensate for the voltage drop by activating a tap with a voltage rated over the nominal voltage. As a result, a deviation of the magnitude of the secondary voltage from the nominal voltage can be kept small, for example within a tolerance of 10%.

According to another preferred embodiment, the controller comprises a locally implemented functional unit which is configured to determine a load asymmetry and to decide on a phase reconfiguration to be performed by the at least one phase shifter based on the detected load asymmetry. In this embodiment, rather than providing a central management system for remotely deciding on an optimal phase reconfiguration within the network, a local switching logic in the form of a functional unit integrated with the phase balancing device is used which is simpler, cheaper, and just as effective.

Preferably, the locally implemented function unit is configured to determine the load asymmetry upstream and downstream of the device, depending on an upstream line impedance. For this purpose, the upstream line impedance can be manually input or measured by the device.

In a preferred embodiment, the locally implemented function unit is configured to monitor a downstream electric current for at least one event of abrupt change and to calculate the upstream line impedance based on a network model which includes the upstream line impedance, the downstream electric current and other electric quantities as parameters, the network model assuming that the parameters other than the monitored downstream electric current remain unchanged during the event.

Preferably, the locally implemented function unit is configured to monitor the downstream electric current for a plurality of events and to perform a regression analysis based on the events for calculating the upstream line impedance. For example, a least absolute value regression may be performed on the captured samples.

According to another aspect of the invention a method for phase balancing in a polyphase electric power distribution network is provided. According to this method a plurality of alternating voltages having initial phase angles with a predetermined phase offset relative to each other is supplied from an upstream portion of the polyphase electric power distribution network. A phase angle of at least one of the alternating voltages is shifted from the initial phase angle by a changeover phase angle which is equal to the predetermined phase offset. The at least one phase-shifted alternating voltage is supplied to a downstream portion of the polyphase electric power distribution network. The phase angle of the at least one alternating voltage is successively changed over a plurality of intermediate phase angles.

Brief Description of the Figures

Hereinafter, specific embodiments are described referring to the drawings, wherein:

Figure 1    is a diagram illustrating a phase jump of a voltage signal that causes a switchover dead time in a conventional system;
Figure 2    is a block diagram illustrating an electric power distribution network according to an embodiment of the invention;
Figure 3    is a circuit diagram showing a phase shifting transformer according to an embodiment of the invention;
Figure 4    is a vector diagram illustrating a sequence of steps carried out by the phase shifting transformer to perform a transition from phase one to phase three;
Figure 5    is a circuit diagram illustrating a voltage drop compensation;
Figure 6    is a diagram showing a phase shift at a current-signal zero-crossing according to an embodiment of the invention;
Figure 7    is diagram showing a power distribution network in which a plurality of phase balancing devices is arranged;
Figure 8    is a diagram illustrating the operating principle of a locally implemented functional unit for determining a load asymmetry;
Figure 9    is a diagram illustrating an example where the phases are switched sequentially by two phase balancing devices; and
Figure 10    is a diagram illustrating a general network model based on which an upstream line impedance is estimated by the phase balancing device.

Detailed Description of the invention

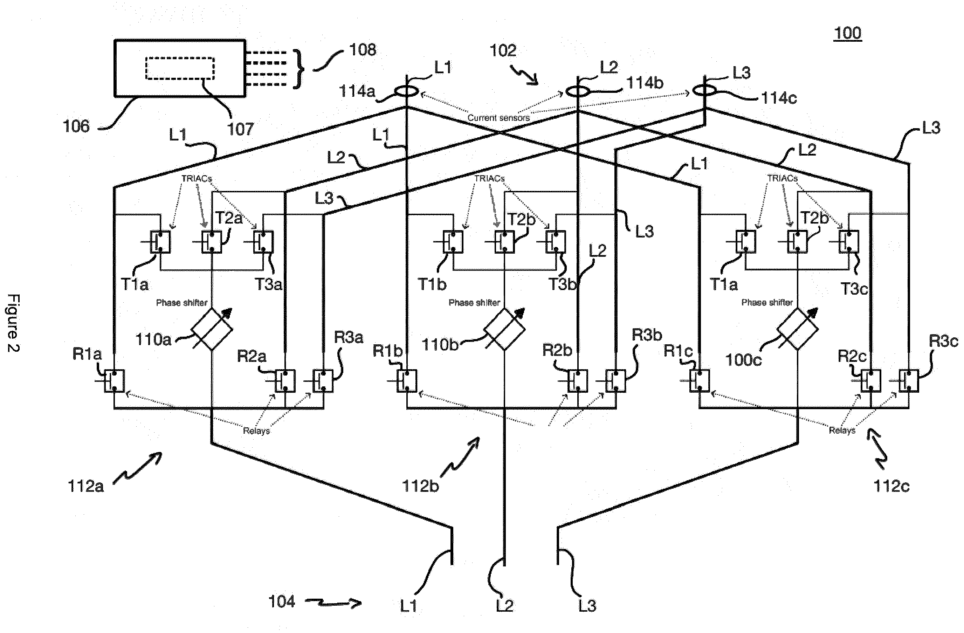

Figure 2 is a block diagram illustrating a phase balancing device 100 according to an embodiment of the present invention.

The phase balancing device 100 can be used in a polyphasic electric power distribution network which forms an interconnected system for delivering electric power from power producers to consumers. In the present embodiment, the polyphasic electric power distribution network is configured as a three-phase power system. Thus, the power distribution network is configured to distribute three-phase electric power which is a common type of alternating current used in electricity generation, transmission, and distribution. Figure 2 shows only components of the phase balancing device 100 which are useful for understanding the operation principle of the invention.

From an upstream portion of the network, a phase input 102 of the phase balancing device 100 is supplied with three-phase alternating power. Accordingly, the phase input 102 comprises three wires L1, L2, and L3, the phase angles of the alternating voltages and currents on these wires L1, L2, L3 being offset from each other by approximately 120°. According to this embodiment, the phase balancing device 100 further comprises a phase output 104 also having three wires. In Figure 2, these wires are denoted by L1, L2, L3 in an order that represents a normal operating state prior to executing a phase switching maneuver described below. The phase output 104 serves to output the phase-shifted alternating power to a downstream portion of the network where the alternating power is supplied to consumers, i.e. loads.

Between the phase input 102 and the phase output 104, the phase balancing device 100 includes in total three pathways 112a, 112b, 112c, each pathway having a phase shifter 110a, 110b, 110c, respectively. Here, the number of phase shifters 110a, 110b, and 110c corresponds to the number of phases to be switched into each other in this specific example.

Each pathway 112a, 112b, 112c of the phase balancing device 100 further includes a switching arrangement which is controlled by the controller 108 to activate and deactivate the respective phase shifter 110a, 110b, 110c. The switching unit included in the pathway 112a comprises three switches R1a, R2a, R3a, e.g. relays, which can be switched on individually to bypass the current flow past the phase shifter 110a in order to deactivate the phase shifter 110a. For instance, in a state where the relay R1a is switched on and the relays R1b, R1b are switched off, phase one L1 is switched through unchanged from the phase input 102 to the phase output 104. The same applies for phases L2 and L3 when the relays R1b and R1c are on, respectively, while the other two relays are off. In any case, if one of the relays R1a, R1b, R1c is on, the phase balancing device 100 is in its normal operating state where the phase angles of the alternating voltages remain unchanged. The switching arrangements of the other pathways 112b, 112c, where the corresponding relays are denoted b and c, respectively, operate in the same way.

Each switching arrangement includes additional switches T1a to T3a, T1b to T3b, and T1c to T3c, respectively, which are provided upstream of the respective phase shifter 110a, 110b, 110c. These switches are individually switched on in a state, where the relays R1a to R1c, R1b to R3b, R1c to R3c are switched off, in order to activate the respective phase shifter 110a, 110b, 110c. For example, if the switch T1a of the pathway 112a is on, while the switches T2a and T3a are off, the phase angle of the alternating voltage on L1 is shifted by means of the phase shifter 110a. The same applies to the other pathways 112b and 112c.

Each of the switches T1a to T3a, T2a to T3c, and T1c to T3c, may be formed by a TRIAC (triode for alternating current) having a very short switching time. Thus, there is practically no time delay before the TRIAC kicks in after the respective relay R1a to R3a, R2a to R3c, and R1c to R3c is switched off.

The phase balancing device 100 includes a controller 106 which may be configured to control an overall operation of the phase balancing device 100. In particular, the controller 106 serves to control the phase shifting maneuver to be performed by the phase balancing device 100. For simplicity, lines required to transmit signals between the controller 106 and individual components of the phase balancing device 100 are generally to by reference sign 108.

According to the present embodiment, the controller 106 may comprise a locally implemented functional unit 107 which is configured to determine a load asymmetry and to control a phase reconfiguration as described below. The functional unit 107 forms a local switching logic which is integrated into the phase balancing device 100. As a result, there is no need to set up a central management system in the power distribution network that decides remotely on the phase reconfiguration.

The controller 106 is configured to switch between the normal operating state, in which the phase shifters 110a, 110b, 110c are deactivated, and a phase switching state, in which the phase shifters 110a, 110b, 110c are activated to execute the phase switching maneuver. For this purpose, the controller 106 controls the switching states of the relays R1a to R3a, R1b to R3b, R3a to R3c and the TRIACs T1a to T3a, T1b to T3b, T1c to T3c accordingly.

As an example, it is assumed that the phase balancing device 100 shown in Figure 2 is configured to shift the initial phase angle of each alternating voltage on L1, L2, and L3, respectively by a changeover angle of 120° forward (clockwise) or counterclockwise (backward). If L1 is identified with phase one, L2 is identified with phase two, and L3 is identified with phase three, phase switching results from phase one to phase three, from phase two to phase one, and from phase three to phase two. In this example, the switching states of the relays and TRIACs of the phase balancing device 100 are controlled as follows.

Initially, in the normal operating state, the relays R1a, R2b, and R3c are switched on, while all other switches are off. Accordingly, the alternating voltages on L1, L2, and L3 are passed through the phase balancing device 100 without changing the initial phase angles of the voltages.

Subsequently, the relays R1a, R2b, and R3c are switched off to terminate the normal operating state. At the same time, the TRIACs T1a, T2b, and T3c are switched on to activate the phase switching maneuver. More specifically, the phase shifter 110a shifts the phase angle of the voltage on L1 by 120°. Likewise, the phase shifter 110b shifts the phase angle of the voltage on L2 by 120°, and the phase shifter 110c shifts the phase angle of the voltage on L3 by 120°. Here, the direction of phase rotation can be clockwise or counterclockwise.

Finally, the TRIACs T1a, T2b, and T3c are switched off to terminate the phase switching state. At the same time, the relays R3a, R1b, and R2c are switched on to reactivate the normal operating state. However, compared to the initial normal operating state, phase one is changed to phase three on L3, phase two is changed to phase one on L1, and phase three is changed to phase two on L2.

In order to avoid large phase jumps, each phase shifter 110a, 110b, 110c is configured to change the phase angle of the corresponding voltage smoothly until the intended phase shift is achieved. Thus, starting from the initial phase angle, the phase shifter changes the phase angle successively over a plurality of intermediate phase angles which add up to the predetermined changeover phase angle of 120°. The intermediate phase angles can be set continuously or a sequence of discrete angle steps.

As shown in Figure 2, the phase input 102 may include three sensor units 114a, 114b, 114c which are configured to measure the electric currents and voltages on L1, L2, and L3 supplied to the phase balancing device 100.

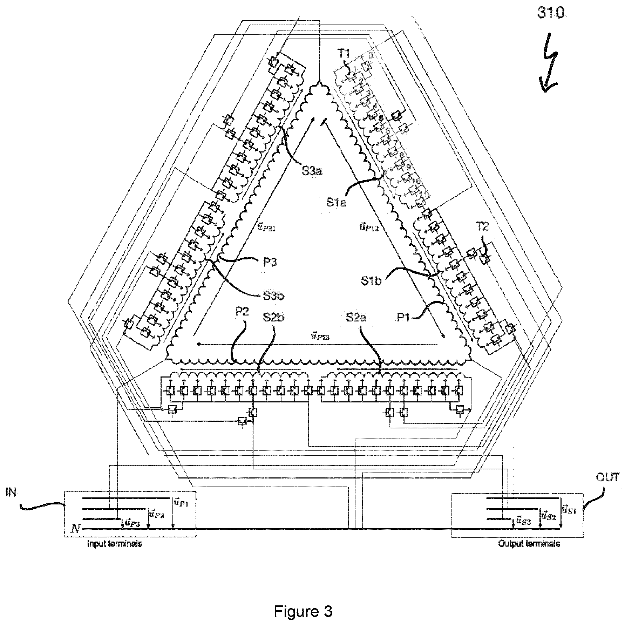

The phase shifters 110a, 100b, 100c shown in Figure 2 can be implemented in several ways. For instance, each phase shifter may be formed by a phase shifting transformer 310 as illustrated in Figure 3. The phase shifting transformer 310 is a delta zigzag transformer whose primary side is configured in delta connection and whose secondary is configured side in zigzag connection.

On the primary side configured in delta connection, the phase shifting transformer 310 of Figure 3 has three primary windings P1, P2, and P3. Three primary voltages $\vec{u}_{P1}$, $\vec{u}_{P2}$, and $\vec{u}_{P3}$ corresponding to the three phases are applied to the primary windings P1, P2, and P3. The primary voltages $\vec{u}_{P1}$, $\vec{u}_{P2}$, and $\vec{u}_{P3}$ represent line-to-neutral voltages, i.e. voltages between the first, second, and third primary windings P1, P2, and P3, respectively, and neutral (N). The phase shifting transformer 310 has an input IN including input terminals associated with the primary voltages $\vec{u}_{P1}$, $\vec{u}_{P2}$, and $\vec{u}_P3$ and neutral (N), respectively.

On the secondary side configured in zigzag connection, the phase shifting transformer 310 has a total of six windings S1a, S1b, S2a, S2b, S3a, S3. In accordance with a zigzag configuration, the secondary windings S1a, S1b, S2b, S3a, S3b are interconnected in pairs. The first winding pair S1a, S1b is arranged at the first primary winding P1, the second winding pair S2a, S2b is arranged at the second primary winding P2, and the third winding pair S3a, S3b is arranged at the third primary winding P3.

Three secondary voltages $\vec{u}_{S1}$, $\vec{u}_{S2}$, and $\vec{u}_{S3}$ represent line-to-neutral voltages. The phase shifting transformer 310 has an output OUT including output terminals that are associated with the secondary voltages $\vec{u}_{S1}$, $\vec{u}_{S2}$, and $\vec{u}_{S3}$, and neutral (N), respectively.

The secondary windings phase shifting transformer 310 is configured to selectively interconnect the secondary windings S1a, S1b, S2a, S2b, S3a, S3b in pairs. Thus, selectively interconnected winding pairs are provided, consisting of two secondary windings in series.

In addition to the line-to-neutral voltages $\vec{u}_{S1}$, $\vec{u}_{P2}$, and $\vec{u}_{P3}$ on the primary side and the line-to-neutral voltages $\vec{u}_{S1}$, $\vec{u}_{S2}$, and $\vec{u}_{S3}$ on the secondary side, the phase shifting transformer 310 also provides line-to-line voltages. A line-to-line voltage represents a difference between any two line-to-neutral voltages. For instance, the line-to-line voltage $\vec{u}_{P12}$ on the primary side is given by the difference of the line-to-neutral voltages $\vec{u}_{P1}$ and $\vec{u}_{P2}$, and the line-to-line voltage $\vec{u}_{S31}$ on the secondary side is given by the difference $\vec{u}_{S3}$ and $\vec{u}_{S1}$.

The selective interconnection of different transformer windings may be achieved by suitable switches. In Figure 3, one of these switches is representatively denoted T2.

Each of the secondary windings S1a, S1b, S2a, S2b, S3a, S3b has multiple taps. According to the specific embodiment shown in Figure 3, each secondary winding S1a, S1b, S2a, S2b, S3a, S3b comprises eleven taps. As shown as an example for the secondary winding S1a, the taps of each secondary winding are numbered 0, 1, 2, ..., 10, 11 in Figure 3. The order of numbering starts with the entrance into the respective secondary winding, where the entrance is represented by tap no. 0 directly connecting to the incoming wire.

The phase shift transformer 310 includes a plurality of switches, one of which is representatively denoted T1 in Figure 3. Each switch T1 is assigned to one of the taps. Thus, the switches T1 are configured to selectively activate one of the taps to vary the voltage tapped across the respective secondary winding according to the tap that is currently activated. For example, if the voltage across a single winding section of the secondary winding S1a associated with a single tap is 10 volts, the total voltage across the winding S1a adds up to k times 10 volts in case that tap no. k is activated (i.e. 0 volt at tap no. 0, 10 volts at tap no. 1, 20 volts at tap no. 2, 30 volts at tap no. 3, 40 volts at tap no. 4, 50 volts at tap no. 5, etc.). The same applies to the other secondary windings.

As known in the art, three-phase electrical quantities can be represented by a vector diagram. In such a vector diagram, the length of a vector represents the magnitude of the electric quantity, i.e. the magnitude of the voltage or current, while the angle of the vector represents the relative phase with respect to another vector. Hereinafter, the operation of the delta zigzag transformer shown in Figure 3 is explained with reference to such a vector representation.

Roughly speaking, the embodiment shown in Figure 3 works as follows. In a normal connection state, the secondary windings S1a, S1b, S2a, S2b, S3a, S3b of the phase shifting transformer 310 are connected in a way that the secondary windings mirror the primary voltage vectors, i.e. voltage phase angles and magnitudes on the secondary side are the same as on the primary side. When a switching maneuver is initiated, the taps on the secondary windings are leveraged and connected in a way that a secondary voltage vector is sequentially rotated to one of the other two phases in the system. For example, the phase one voltage vector is rotated into phase three voltage vector. Consequently, in order to maintain the phase sequence, phase one is rotated into phase three, phase two is rotated into phase one, and phase three is rotated into phase two in the present embodiment.

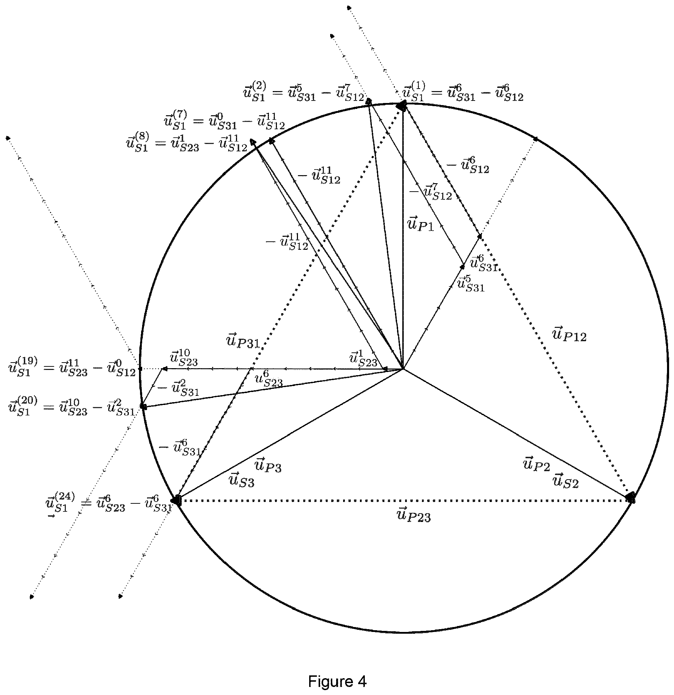

In more detail, the operation of the delta zigzag transformer of Figure 3 can be best understood by a specific example which is illustrated in a vector diagram according to Figure 4. This example shows a procedure of sequential reconfiguration for phase one being rotated into phase three.

In Figure 4, the respective voltages are designated by vectors. The line-to-neutral voltages such as the primary voltages $\vec{u}_{P1}$, $\vec{u}_{P2}$, $\vec{u}_{P3}$ and the secondary voltages $\vec{u}_{S1}$, $\vec{u}_{S2}$, $\vec{u}_{S3}$ are designated with a single subscript i=1,2,3. The line-to-line voltages such as $\vec{u}_{P12}$ and $\vec{u}_{S31}$ are designated with two subscripts i=1,2,3 and j=1,2,3.

In addition, a superscript enclosed in parentheses denote the number of a step in the reconfiguration sequence. In contrast, a superscript that is not enclosed in parentheses denotes the number of an activated tap. For example, the voltage $\vec{u}_{S1}^{(1)}$ is the secondary voltage in step no. 1 of the reconfiguration sequence, and $\vec{u}_{S31}^{6}$ is the line-to-line voltage $\vec{u}_{S31}$ with activated tap no. 6.

At the initial stage in step 1, the combination of secondary windings S31, with activated tap no. 6, and -S12, with activated tap no. 6, forms a mirror voltage vector

$$\vec{u}_{S1}^{(1)}$$

to phase one of the primary side of the phase shifting transformer 310 which is represented by vector $\vec{u}_{P12}$.

In step 2, tap no. 6 is deactivated and tap no. 5 is activated on the S31 winding. Simultaneously, tap no. 6 is deactivated, and tap no. 7 is activated on the -S12 winding. The resulting voltage vector

$$\vec{u}_{S1}^{(2)}$$

is rotated counterclockwise by 5°.

The actual phase rotation depends on the number and setup of taps on the secondary windings. In step 3, the procedure is repeated. Here, tap no. 5 is deactivated and tap no. 4 is activated on the S31 winding. Simultaneously, tap no. 7 is deactivated and tap no. 8 is activated on the -S12 winding, the resulting voltage vector uS1^(3) being further rotated counterclockwise.

The procedure is repeated until, in step 7, the S31 winding is disconnected and winding -S12 is fully activated at tap no. 11, which results in the voltage vector

$$\vec{u}_{S1}^{(7)}.$$

In step 8, S23 winding is connected in series with winding -S21, resulting in the voltage vector

$$\vec{u}_{S1}^{(8)}.$$

The sequence again provides for gradually increasing the tap no. on winding S23 and simultaneously gradually decreasing the tap no. on winding -S12.

In step 19, winding S23 is activated on tap no. 11, and winding -S12 is disconnected, resulting in the voltage vector

$$\vec{u}_{S1}^{(19)}.$$

In step 20, winding -S31 is activated in place of -S12, and the procedure of sequentially decreasing the tap no. on winding S23 and sequentially increasing the tap no. on winding S31 is repeated until step 24, where tap no. 6 is activated on both S23 and S31 windings, resulting in the voltage vector

$$\vec{u}_{S1}^{(24)}.$$

Step 24 represents the final vector position in the sequence applied to rotate phase one into phase three.

As can be seen in Figure 4, the phase shifting transformer 310 avoids a large phase jump when rotating phase one into phase three. Rather, the phase shifting transformer 310 is controlled to successively pass through a plurality of intermediate phase angles represented by the voltage vectors

$$\vec{u}_{S1}^{(1)}, \ \vec{u}_{S1}^{(2)},$$

... before the changeover phase angle of 120° represented by the voltage vector

$$\vec{u}_{S1}^{(24)}$$

is reached.

In Figure 4, the phase rotation is counterclockwise. However, the same principle can also be applied clockwise.

Furthermore, in Figure 4, the sequential reconfiguration of the secondary windings of the phase shifting transformer is illustrated for rotating phase one into phase three. Corresponding steps are performed to rotate phase two into phase one and to rotate phase three into phase two.

According to the embodiment shown in Figures 2 and 3, each secondary winding S1a, S1b, S2a, S2b, S3a, S3b has eleven taps each. However, the number of taps can also be different and set as required. Furthermore, the taps can also be differently spaced on the respective winding to change the voltage on the respective tap. In addition, the voltages on the secondary windings do not have to be changed stepwise. They can also be varied continuously. In any case, the same operating principle can be applied.

Furthermore, it is important to note that each of the secondary windings is able to output full line-to-neutral voltage that is present on the primary side of the phase shift transformer.

The phase shifting transformer is active only for switching maneuvers which last a couple of seconds at the most. Otherwise, the phase shifting transformer is disconnected. Therefore, from an economic point of view, it is advantageous if, in terms of nominal power, the phase shifting transformer is as small as possible and is potentially overloaded during the switching maneuver. The voltage drop across the phase shifting transformer can be significant in the event of overloading. For such instances, the secondary windings may have upper taps which are rated for higher tap voltages than the nominal voltage.

As mentioned above, the phase balancing device 100 includes the current sensors 114a, 114b, 114c which serve to measure the input current. Therefore, the controller 106 may be configured to compensate for the voltage drop due to measured input current by activating taps associated with tap voltages higher than the nominal voltage. Thus, it can be achieved that the magnitudes of the secondary voltages are always equal to the primary voltages within a predetermined tolerance range $\Delta V$, i.e. the magnitude of the secondary voltage is equal to the magnitude of the primary voltage $\pm \Delta V$. For example, the tolerance range $\Delta V$ may be 10% of the magnitude of the primary voltage.

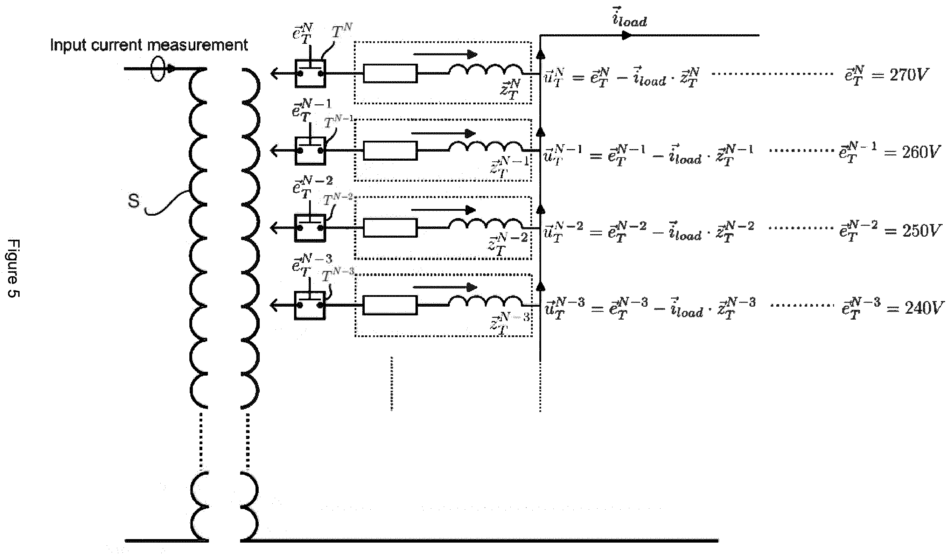

An example is illustrated in Figure 5, where a secondary winding S comprises a plurality of taps $T^N$, $T^{N-1}$, $T^{N-2}$, $T^{N-3}$ etc., wherein the superscripts N-1, N-2, N-3 denote a sequence of successively decreasing tap voltages $\vec{e}_T^N$, $\vec{e}_T^{N-1}$, etc. In this example, the nominal voltage is assumed to be 230 volts. However, the highest tap $T^N$ on the secondary winding S is rated at 270 volts for the unloaded transformer. For the transformer under load, the voltage drop across the transformer impedance will be compensated by selecting higher transformer taps thus achieving nominal output voltage. For instance, with respect to the highest tap $T^N$, the following relation holds:

$$\vec{u}_T^N = \vec{e}_T^N - \vec{i}_{load} \cdot \vec{z}_T^N,$$

wherein $\vec{u}_T^N$ designates the secondary voltage compensated for the voltage drop, $\vec{i}_{load}$ designates the load current, $\vec{e}_T^N$ designates the induced voltage, and $\vec{z}_T^N$ designates the impedance. Corresponding relations hold for the lower taps, as shown in Figure 5.

The quantities $\vec{e}_T^N$ and $\vec{z}_T^N$ are known in advance, and the quantity $\vec{i}_{load}$ is measured. Accordingly, a suitable tap providing a voltage which is closest to the primary voltage can be selected.

The speed of the switching maneuver described above may be limited. For instance, it may be limited by a standard which states that rate of change of frequency (ROCOF) cannot exceed 1 Hz/s. The switching maneuver reveals a slight increase or decrease in frequency, depending on whether the rotation is clockwise or counterclockwise. For example, if the switching maneuver is executed in one second, this gives a rotation rate of 120°/s which equals to a ROCOF of ⅓ Hz/s. That means that the frequency will drop or increase for 0.333 Hz for the duration of the switching maneuver.

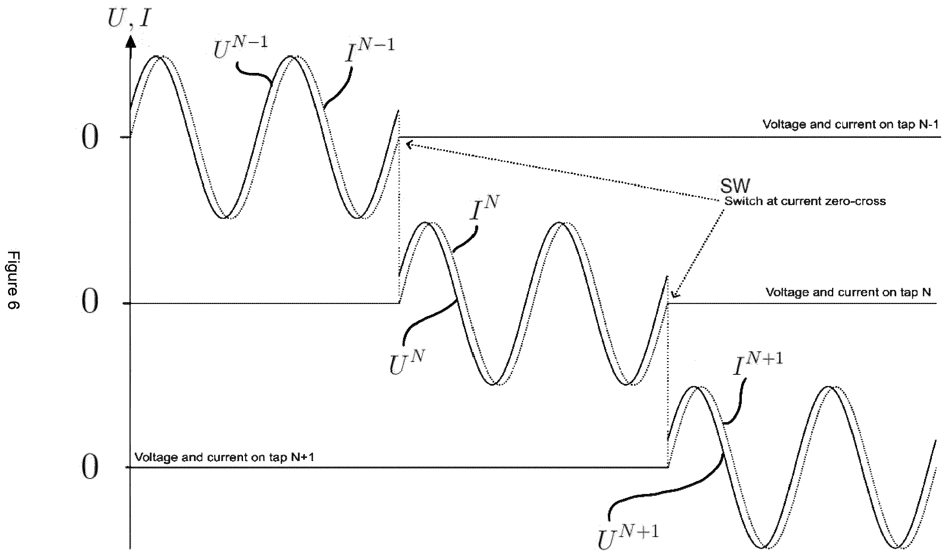

In order to avoid an arcing effect caused by inductive loads, the transitions within a switching maneuver, in which one tap is switched to another tap of the respective secondary winding, are preferably carried out at a current signal zero-crossing, as illustrated in Figure 6.

Figure 6 is a diagram showing the voltage and current over time for a switching sequence. In this switching sequence, first tap no. N-1 is switched to a tap no. N, and then tap no. N is switched to tap no. N+1. The times of switchovers SW are selected in such a way that the currents $I^N$ and $I^{N-1}$ are equal to zero. Since the currents on the secondary side of the transformer are closely measured, the controller is able to initiate a switchover at the current signal zero-crossing. As a result, the occurrence of arc flushes due to inductive loads can be prevented.

The nature of the phase balancing device inherently operates to reduce the load asymmetry upstream of the device. Downstream of the device the load asymmetry remains, regardless of the switch configuration. Thus, in order to achieve an effective reduction of load asymmetry, it may be advantageous to install the phase balancing device according to the invention in more than one location in the electric power distribution network.

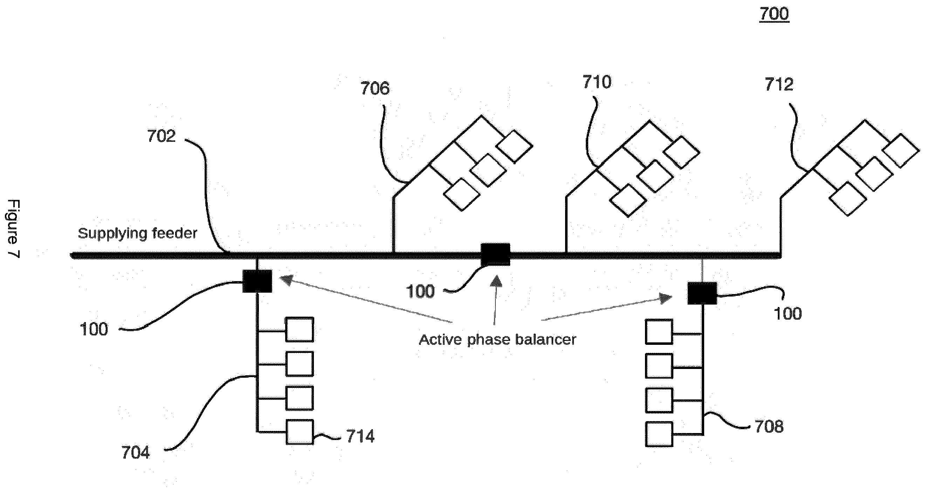

The distribution of several devices, each corresponding to the phase balancing device 100 shown in Figure 2, within an electric power distribution network 700 is illustrated in Figure 7. The power distribution network 700 comprises a supplying feeder 702. A plurality of laterals 704, 706, 708, 710, 712 branches off from the supplying feeder 702, each lateral supplying a plurality of loads. In Figure 7, one of these loads is representatively denoted 714.

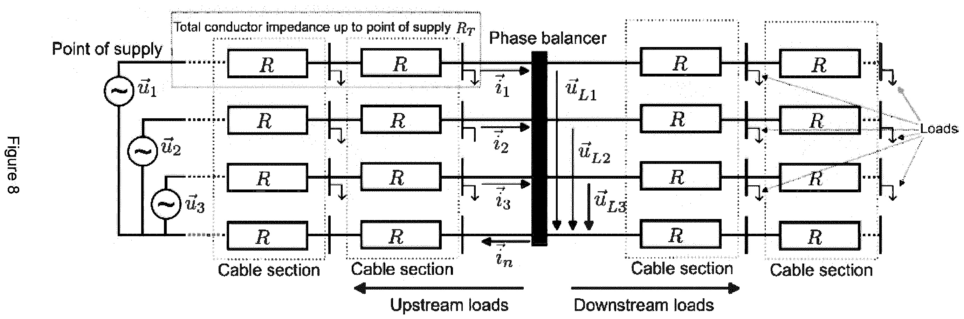

The switching logic based on which the phase balancing device switches between the different phases can be implemented in several ways. Thus, the phase balancing device could be controlled remotely using a central management system that decides the optimal phase configuration and switching maneuvers for a part of a power distribution network. As this control scheme can be complicated and expensive, a local switching logic may be implemented which is simpler, cheaper, and just as effective. Such a control scheme is illustrated in Figure 8.

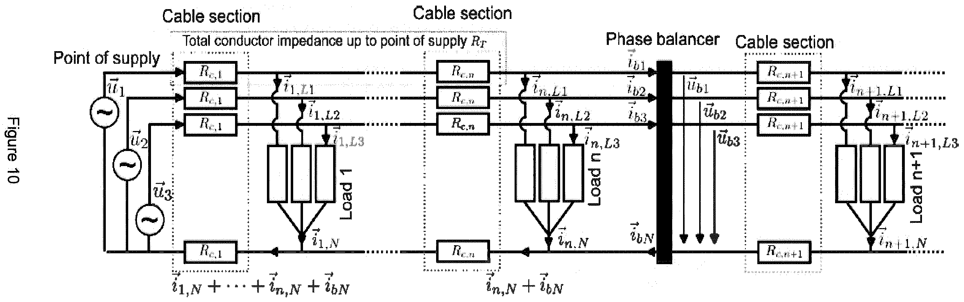

As shown in Figure 8, the phase balancing device 100 has an internally implemented upstream line impedance $R_T$ up to the point of supply which is usually a transformer. In Figure 8, the total upstream line impedance $R_T$ is given by the sum of impedances R caused by a series of cable sections of the respective line. Each total upstream line impedance $R_T$ can be manually programmed into the phase balancing device 100. Alternatively, the phase balancing device 100 may be configured to measure each upstream line impedance $R_T$ by itself applying a procedure that is described later with reference to Figure 10. In any case, hereinafter, it is assumed that the upstream line impedances $R_T$ are known.

Referring to Figure 8, the following explains how the phase balancing device may operate to decide on a switch configuration that is suitable for providing good phase balance.

To a good approximation, the phase balancing device 100 may assume balanced voltages at the point of supply. Then, the phase balancing device 100 measures the line voltages and currents using e.g. the sensor units 114a, 114b, 114c shown in Figure 2. With the upstream line impedance available, the phase balancing device 100 can determine the voltage drop based on the measured current through the device which supplies the loads downstream. Furthermore, based on the measurement of the voltages, the phase balancing device 100 can determine the voltage asymmetry. More specifically, the phase balancing device 100 is configured to estimate the fraction of the voltage asymmetry that is caused by the loads downstream and the fraction of the voltage asymmetry that is caused by the loads upstream of the device. Based on this estimation, the phase balancing device can calculate cost functions for the current state and two other possible switching maneuvers and decide upon that.

Referring to the example shown in Figure 8, a local switching logic for estimating voltage drops caused by loads downstream and upstream of the phase balancing device may be based on the following equations and Table 1.

$$\vec{u}_{ds1} = \vec{u}_1 + \vec{i}_1 \cdot R_T$$

$$\vec{u}_{ds2} = \vec{u}_2 + \vec{i}_2 \cdot R_T$$

$$\vec{u}_{ds3} = \vec{u}_3 + \vec{i}_3 \cdot R_T$$

$$u_{dsmax} = max\{|\vec{u}_{ds1}|, |\vec{u}_{ds2}|, |\vec{u}_{ds3}|\}$$

Table 1

| Loads upstream | Loads downstream 1 | Loads downstream 2 | Loads downstream 3 |
|---|---|---|---|
| $u_{dsmax}$ - $|\vec{u}_{ds1}|$ | $|\vec{i}_1| \cdot R_T$ | $|\vec{i}_3| \cdot R_T$ | $|\vec{i}_2| \cdot R_T$ |
| $u_{dsmax}$ - $|\vec{u}_{ds2}|$ | $|\vec{i}_2| \cdot R_T$ | $|\vec{i}_1| \cdot R_T$ | $|\vec{i}_3| \cdot R_T$ |
| $u_{dsmax}$ - $|\vec{u}_{ds3}|$ | $|\vec{i}_3| \cdot R_T$ | $|\vec{i}_2| \cdot R_T$ | $|\vec{i}_1| \cdot R_T$ |

As shown in Table 1, voltage drops for downstream loads are calculated for all possible downstream load configurations (with loads indicated by angled arrows in Figure 8).

A numerical example based on the above scheme is illustrated by the following equations and Table 2 which contains actual measured and estimated values.

$$|\vec{u}_1| = 220V$$

$$|\vec{u}_2| = 225V$$

$$|\vec{u}_3| = 229V$$

$$\vec{u}_{ds1} = \vec{u}_1 + \vec{i}_1 \cdot R_T; |\vec{u}_{ds1}| = 225V$$

$$\vec{u}_{ds2} = \vec{u}_2 + \vec{i}_2 \cdot R_T; |\vec{u}_{ds1}| = 227V$$

$$\vec{u}_{ds3} = \vec{u}_3 + \vec{i}_3 \cdot R_T; |\vec{u}_{ds1}| = 230V$$

$$u_{dsmax} = max\{|\vec{u}_{ds1}|, |\vec{u}_{ds2}|, |\vec{u}_{ds3}|\}$$

Table 2

| Loads upstream | Loads downstream 1 | Loads downstream 2 | Loads downstream 3 |
|---|---|---|---|
| $u_{dsmax} - |\vec{u}_{ds1}| = 5V$ | $|\vec{i}_1| \cdot R_T = 5V$ | $|\vec{i}_3| \cdot R_T = IV$ | $|\vec{i}_2| \cdot R_T = 2V$ |
| $u_{dsmax} - |\vec{u}_{ds2}| = 3V$ | $|\vec{i}_2| \cdot R_T = 2V$ | $|\vec{i}_1| \cdot R_T = 5V$ | $|\vec{i}_3| \cdot R_T = 1V$ |
| $u_{dsmax} - |\vec{u}_{ds3}| = 0V$ | $|\vec{i}_3| \cdot R_T = 1V$ | $|\vec{i}_2| \cdot R_T = 2V$ | $|\vec{i}_1| \cdot R_T = 5V$ |

Upon this estimation, a cost function for each switch configuration can be calculated as illustrated in Table 3.

Table 3

| Cost func. 1 | Cost func. 2 | Cost func. 3 |
|---|---|---|
| 5V+5V = 10V | 5V+1V = 6V | 5V+2V = 7V |
| 3V+2V = 5V | 3V+5V = 8V | 3V+1V = 4V |
| 0V+1V = IV | 0V+2V = 2V | 0V+5V = 5V |
| max-mm=9V | max-min=6V | max-min=3V |

The cost function is calculated by summing the estimated voltage drops for downstream and upstream loads on each phase and then calculating the difference between maximum and minimum phase voltage for every switch configuration. The minimum difference gives the most favorable configuration. As indicated in Table 3, a configuration switched phase one to phase three is the most favorable configuration in the above numerical example.

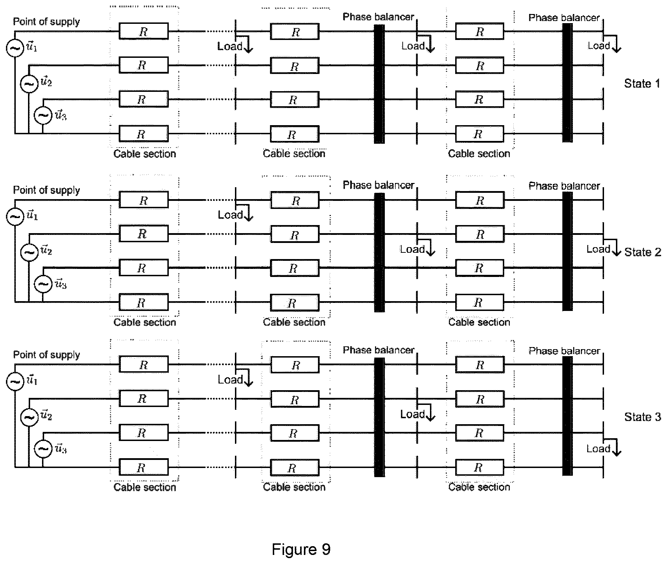

Figure 9 illustrates a hypothetical example of a supply feeder, serving three loads (again denoted by angled arrows), all connected to phase one in the initial state. After estimating the cost functions, the switching maneuver is executed on the first phase balancer, which transfers its two downstream loads to phase two. After that the switching maneuver is executed on the second phase balancer which transfers the third load to phase three.

To avoid executing the switching maneuver too often, a hysteresis can be implemented in the switching logic which requires the cost function values to exceed a predetermined threshold and persist in the given state for a predetermined amount of time.

Operators of power distribution networks normally track the load phase assignments at the point of energy meter connection. With the described phase balancing switching maneuvers this information becomes incorrect. Thus, a communication capability is implemented in the phase balancing device that communicates the switching maneuver e.g. to a central computer. This enables the network operator to correctly account for phase reconfigurations later in collected smart meter measurements.

As mentioned above, the upstream impedance required for the described implementation of a local switching logic, can be measured by the phase balancing device itself without having to input it manually. As the phase balancing device measures phase voltages and currents, it can monitor for fast and large changes in the downstream current measurements. The exact nature of such an event, i.e. how fast and how large the current change needs to be, is a matter of device size. Devices for larger nominal currents require larger downstream current jumps and vice versa. Therefore, the phase balancing device may be configured to store the measurements right before and right after detecting such an event.

An estimation of the total upstream line impedance can be performed based on the following equations referring to a general network model as depicted in Figure 10.

$$\vec{u}_1 = (\vec{i}_{1,L1} + \cdots + \vec{i}_{n,L1} + \vec{i}_{b1}^{(t)}) \cdot R_{c,1} + \cdots + (\vec{i}_{n,L1} + \vec{i}_{b1}^{(t)}) \cdot R_{c,n} +$$
$$\vec{u}_{b1}^{(t)} + (\vec{i}_{n,N} + \vec{i}_{bN}^{(t)}) \cdot R_{c,n} + \cdots + (\vec{i}_{1,N} + \cdots + \vec{i}_{n,N} + \vec{i}_{bN}^{(t)}) \cdot R_{c,1}$$

$$\vec{u}_1 = (\vec{i}_{1,L1} + \cdots + \vec{i}_{n,L1} + \vec{i}_{b1}^{(t+1)}) \cdot R_{c,1} + \cdots + (\vec{i}_{n,L1} + \vec{i}_{b1}^{(t+1)}) \cdot R_{c,n} +$$
$$\vec{u}_{b1}^{(t+1)} + (\vec{i}_{n,N} + \vec{i}_{bN}^{(t+1)}) \cdot R_{c,n} + \cdots + (\vec{i}_{1,N} + \cdots + \vec{i}_{n,N} + \vec{i}_{bN}^{(t+1)}) \cdot R_{c,1}$$

$$\Delta \vec{u}_{b1}^{p} = \vec{u}_{b1}^{(t)} - \vec{u}_{b1}^{(t+1)}$$

$$\Delta \vec{i}_{b1}^{p} = \vec{i}_{b1}^{(t)} - \vec{i}_{b1}^{(t+1)}$$

$$\Delta \vec{i}_{bN}^{p} = \vec{i}_{bN}^{(t)} - \vec{i}_{bN}^{(t+1)}$$

$$- \Delta \vec{u}_{b1}^{p} = \Delta \vec{i}_{b1}^{p} \cdot R_{c,1} + \Delta \vec{i}_{b1}^{p} \cdot R_{c,n} + \Delta \vec{i}_{bN}^{p} \cdot R_{c,n} + \Delta \vec{i}_{bN}^{p} \cdot R_{c,1}; p = 1\ldots P$$

$$- \Delta \vec{u}_{b1}^{p} = \Delta \vec{i}_{b1}^{p} \cdot R_T + \Delta \vec{i}_{bN}^{p} \cdot R_T; p = 1\ldots P$$

$$\mathbf{\Delta u} = \begin{bmatrix} \Delta \vec{u}_{b1}^{1} \\ \Delta \vec{u}_{b1}^{2} \\ \vdots \\ \Delta \vec{u}_{b1}^{P} \\ \Delta \vec{u}_{b2}^{1} \\ \Delta \vec{u}_{b2}^{2} \\ \vdots \\ \Delta \vec{u}_{b2}^{P} \\ \Delta \vec{u}_{b3}^{1} \\ \Delta \vec{u}_{b3}^{2} \\ \vdots \\ \Delta \vec{u}_{b3}^{P} \end{bmatrix} = \begin{bmatrix} \Delta \vec{i}_{b1}^{1} + \Delta \vec{i}_{bN}^{1} \\ \Delta \vec{i}_{b1}^{2} + \Delta \vec{i}_{bN}^{2} \\ \vdots \\ \Delta \vec{i}_{b1}^{P} + \Delta \vec{i}_{bN}^{P} \\ \Delta \vec{i}_{b2}^{1} + \Delta \vec{i}_{bN}^{1} \\ \Delta \vec{i}_{b2}^{2} + \Delta \vec{i}_{bN}^{2} \\ \vdots \\ \Delta \vec{i}_{b2}^{P} + \Delta \vec{i}_{bN}^{P} \\ \Delta \vec{i}_{b3}^{1} + \Delta \vec{i}_{bN}^{1} \\ \Delta \vec{i}_{b3}^{2} + \Delta \vec{i}_{bN}^{2} \\ \vdots \\ \Delta \vec{i}_{b3}^{P} + \Delta \vec{i}_{bN}^{P} \end{bmatrix} \cdot R_T = \mathbf{\Delta i} \cdot R_T$$

$$\mathbf{w} = \mathbf{\Delta u} - \mathbf{\Delta i} \cdot R_T$$

$$J(R_T) = \sum_{i=1}^{P} |w_{b1}^{i}| + |w_{b2}^{i}| + |w_{b3}^{i}|$$

$$\underset{R_T}{\text{minimize}} \; J(R_T)$$

The equations can be written for an unknown total upstream line impedance up to point of supply. As the exact upstream network structure is not known to the phase balancing device, it is assumed that at the time of the event all other quantities, i.e. the currents in upstream loads and the voltage at the point of supply, in the upstream network remain unchanged. This assumption makes it possible to subtract the equations for the two time samples immediately before and after the measurement, leaving only the unknown total upstream line impedance.

The assumption of unchanged upstream load states and supply voltages at the event of downstream current change may be occasionally violated. Therefore, the phase balancing device may be configured to store a larger number of such events and then to perform a least absolute value linear regression on the captured samples.

This type of robust regression has the property of rejecting outliers in the measurement set and will thus output the correct value of the total upstream line impedance. Different estimators of a robust class such as least median of squares, can also be used instead of least absolute value.

As result, the total upstream line impedance can be reliably estimated.

**Claims**

1. A phase balancing device (100) for a polyphase electric power distribution network, comprising:

   a phase input (102) configured to be supplied, from an upstream portion of the polyphase electric power distribution network, with a plurality of alternating voltages having initial phase angles with a predetermined phase offset relative to each other,
   at least one phase shifter (110a, 110b, 110c) configured to shift a phase angle of at least one of the alternating voltages from the initial phase angle by a changeover phase angle which is equal to the predetermined phase offset,
   a phase output (104) configured to supply the at least one phase-shifted alternating voltage to a downstream portion of the polyphase electric power distribution network, and
   a controller (106) configured to control the at least one phase shifter (110a, 110b, 110c), **characterized in that**
   the controller (106) is further configured to cause the at least one phase shifter (110a, 110b, 110c) to successively change the phase angle of the at least one alternating voltage over a plurality of intermediate phase angles.

2. The phase balancing device (100) to claim 1, wherein the controller (106) is configured to cause the at least one phase shifter (110a, 110b, 110c) to successively change the phase angle of the at least one alternating voltage in a sequence of discrete steps or continuously.

3. The phase balancing (100) device to claim 1 or 2, wherein the controller (106) is configured to switch from a normal operating state, in which the at least one phase shifter (110a, 110b, 110c) is deactivated, into a phase switching state, in which the phase shifter (110a, 110b, 110c) is activated.

4. The phase balancing device (100) to claim 3, wherein the controller (106) is configured to activate the at least one phase shifter (110a, 110b, 110c) during a predetermined phase balancing period, and
   wherein the at least one phase shifter (110a, 110b, 110c) is configured to successively change the phase angle of the at least one alternating voltage throughout the predetermined phase balancing period.

5. The phase balancing device (100) to claim 4, wherein the phase balancing period is predetermined to be in a range from 0.6 seconds to 10 seconds.

6. The phase balancing device (100) to any one of the preceding claims, wherein the at least one phase shifter comprises a plurality of phase shifters (110a, 110b, 110c), each phase shifter (110a, 110b, 110c) being configured to shift the initial phase angle of one of the alternating voltages by the changeover angle,
   wherein the phase output (104) is configured to supply all phase-shifted alternating voltages to the downstream portion of the polyphase electric power distribution network.

7. The phase balancing device (100) according to claim 5, wherein the at least one phase shifter is formed by a single phase shifter which is configured to shift the initial phase angle of a single one of the alternating voltages by the changeover angle,
   wherein the phase output is configured to supply the single phase-shifted alternating voltage to the downstream portion of the polyphase electric power distribution network.

8. The phase balancing device (100) any one of the preceding claims, wherein the phase shifter (110a, 110b, 110c) comprises a delta zigzag transformer (310) having three primary windings (P1, P2, P3) configured in delta connection and six secondary windings (S1a, S1b, S2a, S2b, S3a, S3b) configured in zigzag connection, two of the secondary windings (S1a, S1b, S2a, S2b, S3a, S3b) being associated with one of the primary windings (P1, P2, P3).

9. The phase balancing device (100) according to claim 8, wherein each secondary winding (S1a, S1b, S2a, S2b, S3a, S3b) has associated therewith a plurality of taps (T1) which are individually activatable by the controller (106) to vary a voltage tapped from the secondary winding (S1a, S1b, S2a, S2b, S3a, S3b).

10. The phase balancing device (100) according to claim 9, wherein at least one of the taps (T1) of each secondary winding (S1a, S1b, S2a, S2b, S3a, S3b) is rated for a voltage exceeding a nominal voltage of the delta zigzag transformer, and wherein the controller (106) is configured to activate said tap depending on a measured input current to compensate for a voltage drop across the secondary winding.

11. The phase balancing device (100) according to any one of the preceding claims, wherein the controller (106) comprises a locally implemented functional unit which is configured to determine a load asymmetry and to decide on a phase reconfiguration to be performed by the at least one phase shifter (100a, 100b, 100c) based on the detected load asymmetry.

12. The phase balancing device (100) according to claim 11, wherein the locally implemented function unit is configured to determine the load asymmetry depending on an upstream line impedance.

13. The phase balancing device (100) according to claim 12, wherein the locally implemented function unit is configured monitor a downstream electric current for at least one event of abrupt change and to calculate the upstream line impedance based on a network model which includes the upstream line impedance, the downstream electric current and other electric quantities as parameters, the network model assuming that the parameters other than the monitored downstream electric current remain unchanged during the event.

14. The phase balancing device according to claim 13, wherein the locally implemented function unit is configured to monitor the downstream electric current for a plurality of events and to perform a regression analysis based on the events for calculating the upstream line impedance.

15. A method for phase balancing in a polyphase electric power distribution network, wherein:

a plurality of alternating voltages having initial phase angles with a predetermined phase offset relative to each other supplying is supplied from an upstream portion of the polyphase electric power distribution network,
a phase angle of at least one of the alternating voltages is shifted from the initial phase angle by a changeover phase angle which is equal to the predetermined phase offset, and
the at least one phase-shifted alternating voltage is supplied to a downstream portion of the polyphase electric power distribution network,
**characterized in that** the phase angle of the at least one alternating voltage is successively changed over a plurality of intermediate phase angles.

Figure 1

Figure 2

Figure 3

Figure 4

Figure 5

Figure 6

$U, I$

$U^{N-1}$   $I^{N-1}$

$0$

Voltage and current on tap N-1

SW
Switch at current zero-cross

$I^N$

$0$

$U^N$

Voltage and current on tap N

$I^{N+1}$

Voltage and current on tap N+1

$0$

$U^{N+1}$

Figure 7

Figure 8

Figure 9

Figure 10

Europäisches
Patentamt

European
Patent Office

Office européen
des brevets

# EUROPEAN SEARCH REPORT

Application Number

EP 23 21 1872

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 461 300 A (KAPPENMAN JOHN G [US]) 24 October 1995 (1995-10-24) * column 8, line 45 - line 66; figure 1 * | 1-15 | INV. H02J3/18 H02J3/26 |
| A | US 5 619 119 A (PELLETIER PIERRE [CA] ET AL) 8 April 1997 (1997-04-08) * 2. Brief Description of the Related Art: "... a continuum of phase-shift angles around 360 DEG can be obtained with partial zigzag combinations of transformer windings for the prior interconnecting apparatus"; column 1, line 20 - line 36; figures 1-38 * | 1-15 | |
| A | WO 2022/162415 A1 (MULTICHARGE OUE [EE]) 4 August 2022 (2022-08-04) * figures 1-12 * | 1-15 | |

TECHNICAL FIELDS
SEARCHED        (IPC)

H02J

The present search report has been drawn up for all claims

| Place of search | Date of completion of the search | Examiner |
|---|---|---|
| Munich | 23 April 2024 | Bourdon, Jérémy |

CATEGORY OF CITED DOCUMENTS

X : particularly relevant if taken alone
Y : particularly relevant if combined with another
      document of the same category
A : technological background
O : non-written disclosure
P : intermediate document

T : theory or principle underlying the invention
E : earlier patent document, but published on, or
      after the filing date
D : document cited in the application
L : document cited for other reasons

                        

& : member of the same patent family, corresponding
      document

EPO FORM 1503 03.82 (P04C01)

## ANNEX TO THE EUROPEAN SEARCH REPORT
## ON EUROPEAN PATENT APPLICATION NO.

EP 23 21 1872

This annex lists the patent family members relating to the patent documents cited in the above-mentioned European search report.
The members are as contained in the European Patent Office EDP file on
The European Patent Office is in no way liable for these particulars which are merely given for the purpose of information.

23-04-2024

| Patent document cited in search report | | Publication date | Patent family member(s) | | Publication date |
|---|---|---|---|---|---|
| US 5461300 | A | 24-10-1995 | US 5461300 A | | 24-10-1995 |
| | | | WO 9423354 A1 | | 13-10-1994 |
| US 5619119 | A | 08-04-1997 | AU 676561 B2 | | 13-03-1997 |
| | | | BR 9406688 A | | 06-02-1996 |
| | | | CA 2161244 A1 | | 24-11-1994 |
| | | | CN 1123066 A | | 22-05-1996 |
| | | | DE 69402544 T2 | | 04-12-1997 |
| | | | DK 0698309 T3 | | 25-08-1997 |
| | | | EP 0698309 A1 | | 28-02-1996 |
| | | | ES 2103129 T3 | | 16-08-1997 |
| | | | JP H08511152 A | | 19-11-1996 |
| | | | KR 960702691 A | | 27-04-1996 |
| | | | NO 311156 B1 | | 15-10-2001 |
| | | | NZ 265913 A | | 25-09-1996 |
| | | | US 5619119 A | | 08-04-1997 |
| | | | WO 9427351 A1 | | 24-11-1994 |
| WO 2022162415 | A1 | 04-08-2022 | EP 4285454 A1 | | 06-12-2023 |
| | | | WO 2022162415 A1 | | 04-08-2022 |

EPO FORM P0459

For more details about this annex : see Official Journal of the European Patent Office, No. 12/82

**EP 4 395 097 A1**

**Patent documents cited in the description**

- WO 2022162415 A1